## Europäisches Patentamt
## European Patent Office
## Office européen des brevets

(11) Veröffentlichungsnummer : **0 210 398**
**B1**

(12) # EUROPÄISCHE PATENTSCHRIFT

(45) Veröffentlichungstag der Patentschrift :
26.04.89

(51) Int. Cl.⁴ : **E 04 B 1/76**

(21) Anmeldenummer : **86108148.7**

(22) Anmeldetag : **14.06.86**

(54) **Dämmplatte.**

(30) Priorität : **26.07.85 DE 3526715**

(43) Veröffentlichungstag der Anmeldung :
**04.02.87 Patentblatt 87/06**

(45) Bekanntmachung des Hinweises auf die Patenterteilung : **26.04.89 Patentblatt 89/17**

(84) Benannte Vertragsstaaten :
**AT BE CH DE FR GB IT LI LU NL SE**

(56) Entgegenhaltungen :
**DE-A- 2 159 042**
**FR-A- 325 660**
**FR-A- 1 452 919**

(73) Patentinhaber : **ispo GmbH**
**Gutenbergstrasse 6**
**D-6239 Kriftel (DE)**

(72) Erfinder : **Nicklas, Hans**
**Schiebelhuthweg 27b**
**D-6100 Darmstadt (DE)**
Erfinder : **Pruzina, Christoph, Dipl.-Ing.**
**Eigenweg 2**
**D-6229 Walluf (DE)**

(74) Vertreter : **Eggert, Hans-Gunther, Dr.**
**Räderscheidtstrasse 1**
**D-5000 Köln 41 (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

Jouve, 18, rue St-Denis, 75001 Paris, France

EP 0 210 398 B1

**Beschreibung**

Zur Außendämmung der Wände von Gebäuden sind einschalige Vollwärmeschutz-Systeme bekannt. Diese bestehen aus Dämmplatten aus Hartschaumstoff, insbesondere Polystyrol, die mit der Außenwand des Hauses durch einen Ansetz- oder Verbundmörtel verklebt sind und eine Oberbeschichtung aus Dispersionsputz erhalten haben. Durch die materialbedingte Schrumpfung der Hartschaumplatten und Temperatur- und Wettereinflüsse treten erhebliche Spannungen im Außendämm-Verbundsystem, insbesondere zwischen den Dämmplatten und der Putzbeschichtung auf, das kann zu einem Abscheren des Außenputzes von den Dämmplatten und zur Rißbildung in der Deckschicht führen und zwar insbesondere dort, wo die Dämmplatten aneinanderstoßen, obgleich zur Vermeidung der Rißbildung üblicherweise in den Außenputz schon ein Armierungsgewebe eingebettet ist. Es ist bekannt, mindestens die Außenseite der Hartschaumplatten mit Scharen von längst- und querverlaufenden Einschnitten zu versehen, deren Tiefe größer ist als die halbe Plattendicke (EP-A-0015 564). Damit sollen vor allem Spannungsspitzen an den Stoßfugen der Platten vermieden und das Risiko der Rißbildung in den Deckschichten weitgehend ausgeschaltet werden. Um eine bessere Verankerung des Ansetzmörtels und vor allem des Unter- oder Grundputzes auf den Dämmplatten zu erreichen wurden die Oberflächen der Hartschaumplatten mit schwalbenschwanzförmig ausgebildeten Rillen auf einer oder beiden Plattenseiten versehen. Die Dämmplatten haben üblicherweise einen rechteckigen Querschnitt mit senkrecht zur Plattenoberfläche angeordneten Stoßflächen. Es ist aber auch bekannt, sie mit einem ringsumlaufenden Hakenfalz (DE-B-1 658 875) oder mit einer wulstartigen Randleiste zu versehen (DE-A-2 159 042).

Die bekannten Maßnahmen, die sich auf den Hartschaumstoff selbst und dessen Vorbehandlung, z. B. ausreichend lange Lagerung, die verschiedene Gestaltung der Ober- oder Unterseite und ggf. der Stoßflächen der Platten richten, schließen Spaltöffnungen im Stoßbereich nicht mit Sicherheit aus, so daß nach wie vor eine Gewebearmierung des auf die Dämmplatte aufgebrachten Putzes oder einer anderen Beschichtung erforderlich ist.

Der Erfindung liegt daher die Aufgabe zugrunde, benachbarte Dämmplatten beim Aufbringen auf eine ebene Fläche so miteinander zu verzahnen, daß die durch Schrumpfung, Schwindung oder Temperaturänderungen hervorgerufenen Längenänderungen keine Spaltöffnungen im Stoßbereich der Platten aufklaffen lassen, und eine Gewebearmierung des Putzes nicht mehr erforderlich ist.

Diese Aufgabe wird durch die erfindungsgemäße Dämmplatte aus Schaumkunststoff gelöst, die sich durch biberschwanzförmige Verzahnungen an den Stoßflächen, die sich im Verbund vollflächig ergänzen, auszeichnet. Die Erfindung sei im folgenden in Verbindung mit der Zeichnung erläutert ohne daß sie auf die aus den Figuren ersichtliche spezielle Ausführungsform beschränkt ist.

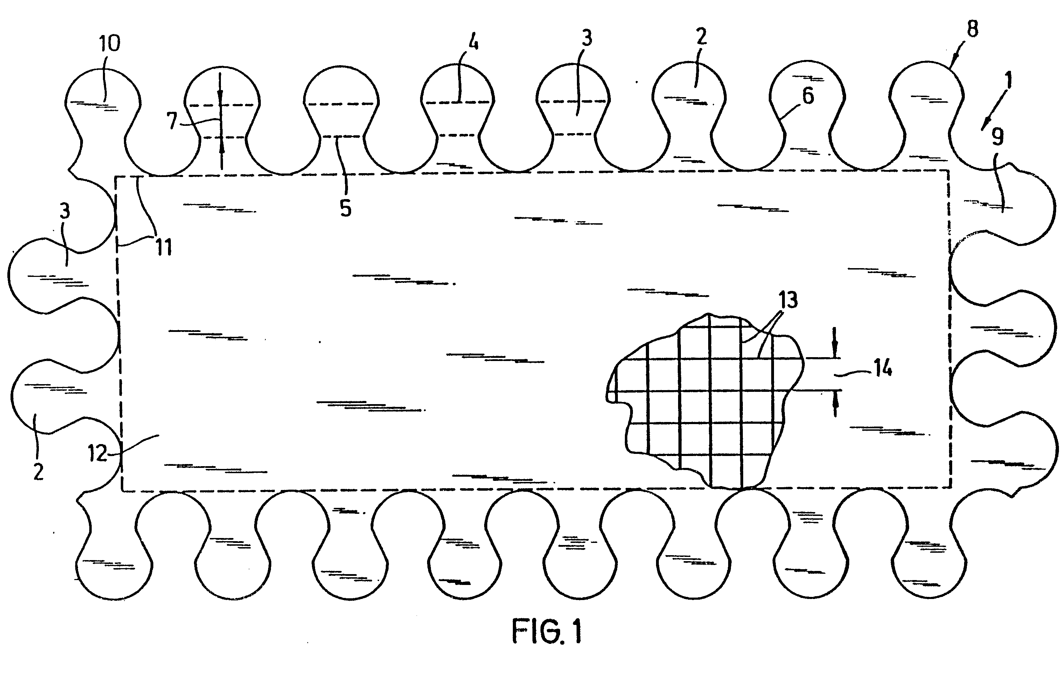

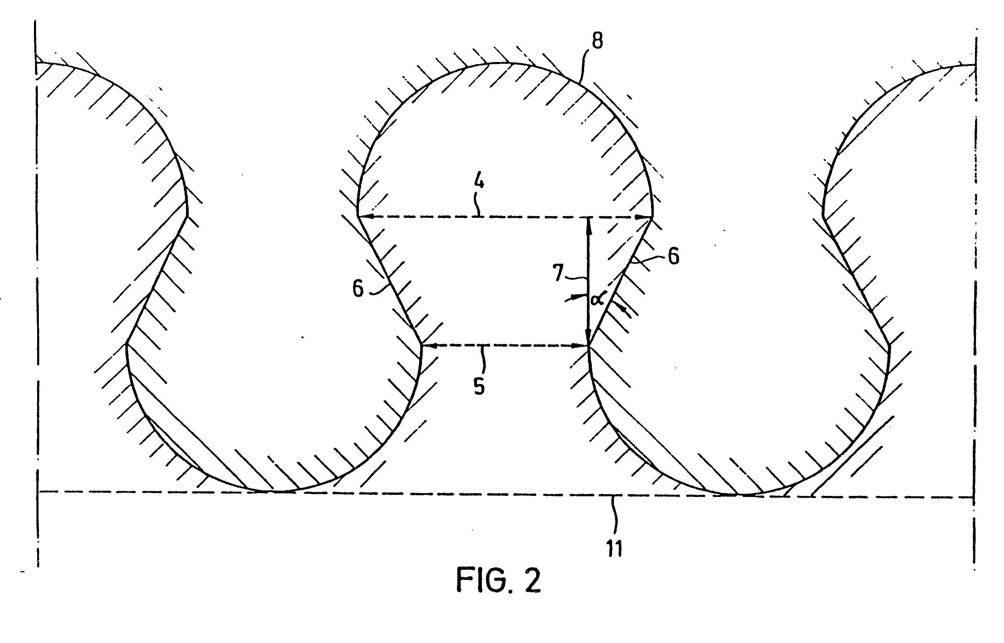

In der Figur 1 ist eine Dämmplatte in etwa vierfacher Verkleinerung in der Draufsicht gezeigt. Figur 2 zeigt eine biberschwanzförmige Verzahnung — im folgenden auch kurz Biberschwanz oder Zahn genannt — der Dämmplatte in der Draufsicht und etwa natürlicher Größe.

Die Dämmplatte (1) besteht aus einem Schaumkunststoff gemäß der deutschen Norm DIN 18 164, und zwar vorzugsweise aus Polystyrol (PS)-Hartschaum. Wegen der speziellen Formgebung ist der Schaumstoff zweckmäßigerweise formgeschäumt und die Dämmplatten werden unmittelbar in den Nennmaßen gefertigt (Automatenplatten).

Die Seiten der Dämmplatte, mit denen sie an der zu isolierenden Fläche befestigt wird bzw. die anschließend mit Putz oder einer anderen Beschichtung versehen werden soll, sind wie üblich parallel. Die Dicke oder Stärke der Platten beträgt wie üblich 30 bis 150 mm, insbesondere 40 bis 80 mm. Die Ränder der Platten, d. h. die Stoßflächen sind vorzugsweise senkrecht zu den Plattenoberflächen angeordnet. Aber die Platten bilden im Grundriß nicht wie üblich ein Rechteck oder Quadrat, sondern haben in Ausbuchtungen und den entsprechenden Aussparungen die Form von Biberschwänzen 2, die sich beim Anbringen der Platten im Verbund vollflächig ergänzen. Die biberschwanzförmige Verzahnung 2 der Dämmplatte 1 setzt sich geometrisch aus einem Trapez 3 mit einem an dessen längerer paralleler Seite 4 angesetzten Segment einer axial symmetrischen Kurve 2. Ordnung 8 und einem Ansatz zusammen, der von der Begrenzungslinie 11 der Grundplatte bis zur kürzeren parallelen Seite 5 des Trapezes 3 reicht und zwangsläufig die Form hat, die sich aus der geforderten vollflächigen Ergänzung bei Verbundverlegung ergibt bzw. zwischen zwei Zähnen 2 einer angrenzenden Platte bleibt.

Die Kurve 2. Ordnung ist vorzugsweise der Bogen eines Kreises, einer Elipse, einer Parabel oder eines Hyperbelastes. Die Länge dieser Regelschnitt-Kurve, d. h. der gebogenen Stoßfläche des Biberschwanzes 2 beträgt mindestens das 1, 1-fache der längeren parallelen Seite 4 des gedachten Trapezes 3.

Der von einem zum anderen Ende der längeren parallelen Seite 4 des Trapezes 3 verlaufende Bogen oder Teil einer Kurve 2. Ordnung bildet also ansetzend an das gedachte Trapez 3 beispielsweise ein Kreissegment oder einen symmetrischen Elipsenabschnitt. Die diesen Teil der biberschwanzförmigen Verzahnung bildende Fläche kann aber auch von einer Parabel oder dem Zweig einer Hyperbel begrenzt sein. Diese an die nicht parallelen Verzahnungsseiten 6 des Trapezes angrenzende bogenförmige Stoßfläche 8 hat die Aufgabe, auftretende Spannungen tangential über ihre Oberflächenwölbung zu verteilen und damit abzubauen. Gleichzeitig verhindert sie durch ihre Gewölbwirkung bei Zugbeanspruchungen ein Aufklaffen des Stoßbereichs zur benachbarten Platte.

Die eigentliche Verzahnung der Dämmplatten an ihren Stoßflächen wird durch die nicht parallel zueinanderverlaufenden Seiten 6 des der Konstruktion zugrundeliegenden Trapezes 3 bewirkt, wobei prinzipiell jede Abwinkelung von mehr als 0° und weniger als 90° gegenüber der Achse des Zahns bzw. der Höhe 7 des Trapezes 3 verzahnend wirkt (z. B. Parallelogramm).

Die Abmessung des Trapezes sind so gewählt, daß der Einzelzahn beim Montieren der Platte ausreichend formstabil bleibt und die verzahnende Wirkung trotz auftretender Spannungen erhalten bleibt. Dazu ist die größte Breite der biberschwanzförmigen Verzahnung 2, d. h. die der Basislinie 11 des Biberschwanzes 2 parallele längere Seite 4 des Konstruktionstrapezes 3, mindestens in einer Länge auszubilden, die dem 1,2-fachen der Plattendicke entspricht.

Diese längere Seite des Trapezes beträgt insbesondere das 1,2- bis 2,5-fache der Plattendicke. Wenn also die Platte beispielsweise 100 mm dick ist, dann ist die Strecke 4 120 bis 250 mm lang.

Die kürzere parallele Seite 5 hat mindestens eine Länge, die der 0,8-fachen Plattendicke entspricht. Höchstens beträgt die Länge der Strecke 5 das 0,9-fache der längeren parallelen Seite 4 des Trapezes 3, um eine gute Verzahnung zu gewährleisten.

Die Höhe 7 des gedachten Trapezes 3 entspricht mindestens der halben Plattendicke, d. h. ihr Wert ist in Längeneinheiten ausgedrückt halb so groß wie die Plattenstärke in mm oder cm.

Damit eine ausreichende Längs- und Querstabilität der spannungsableitenden Verzahnung gegeben ist, sollten die Gesamtabmessungen der Dämmplatte so gewählt werden, daß jede Stoßfläche der im großen und ganzen wie üblich rechteckigen oder quadratischen Dämmplatte mindestens zwei vollständig eingebundene biberschwanzförmige Verzahnungen 2 aufweist, wie das z. B. die Figur 1 bei einer üblichen Gesamtabmessung der Platte von 100 x 50 cm zeigt.

An Gebäudeecken, Fensterleibungen etc. ist eine Verzahnung nicht nötig. Hierfür können Begrenzungsplatten mit einem geraden Rand vorgesehen werden oder hier wird die Verzahnung einfach entsprechend den örtlichen Gegebenheiten abgeschnitten.

Insgesamt sind die biberschwanzförmigen Verzahnungen der Platten an den umlaufenden Begrenzungsflächen so angeordnet, daß sich die Dämmplatten beim Anbringen im Verbund vollflächig ergänzen. Die Verzahnungsgeometrie ist im Eckbereich dementsprechend konstruktiv ausgebildet, wie es die Eckzähne 9 und 10 zeigen, damit auch hier bei Verbundverlegung die Vollflächigkeit der Dämmplattenverkleidung erhalten bleibt.

Die Oberfläche der Biberschwänze 2, d. h. die Grundrißfläche der Zähne außerhalb der gedachten Grenzlinien 11, soll die Hälfte bis 1/20, vorzugsweise die Hälfte bis 1/8 der übrigen von den Linien 11 umschlossenen Plattenoberfläche 12 ausmachen, um die verzahnende und spannungsableitende Funktion der Zähne sicher zu stellen und die Platten gleichzeitig handhabungsfreundlich zu halten.

Mindestens an der zum Verputzen vorgesehenen Oberfläche und senkrecht dazu sind die Dämmplatten zweckmäßig mit Scharen von längst- und querverlaufenden Einschnitten 13 versehen, deren Tiefe größer ist als ihr halber Abstand, wie das aus den EP-A 0 015 564 und 0 056 660 bekannt ist. Diese insbesondere längs- und quer jeweils parallel zu den Linien 11 verlaufenden Einschnitte 13 haben eine Breite von 10 bis 250 µm, vorzugsweise 10 bis 120 µm. Die Einschnittbreite ist in Abhängigkeit von der Zusammensetzung des Putzmörtels so gewählt, daß kein Zuschlag oder Füllstoff des Putzes oder der Beschichtung mit einer Korngröße über 0,25 mm in die Einschnitte eindringen und dadurch ihre Funktion beeinträchtigen kann, an der Oberfläche auftretende Spannung der Dämmplatte aufzunehmen und ins Innere abzubauen.

Die Plattenoberfläche kann, falls gewünscht, auch mit Nuten versehen sein, in die der Putzmörtel eindringen soll und diese Nuten können auch — wie an sich bekannt — hinterschnitten sein. Ebenso wird der Rahmen der Erfindung nicht verlassen, wenn die Dämmplatten an den Rändern gefalzt sind.

Eine beispielsweise Ausführungsform einer Dämmplatte der Erfindung ist in der Figur 1 in etwa 4-facher Verkleinerung dargestellt. Diese zeigt in der Draufsicht eine formgeschäumte Dämmplatte aus Polystyrol (PS)-Hartschaum nach DIN 18 164 einer Dicke von 50 mm mit den Gesamtabmessungen von 1000 x 500 mm und einer von den Linien 11 eingeschlossenen Fläche von 796 x 296 mm. Die Grundrißfläche der Zähne beträgt in diesem Fall etwa ein Drittel, der von den Linien 11 begrenzten übrigen Plattenoberfläche 12. Der Breite der Zähne 2, entsprechend der Strecke 4, beträgt 72 mm, die kürzere parallele Seite 5 des Trapezes 40 mm und die Höhe 6 des Trapezes 30 mm. Die an die längere parallele Seite 4 des Trapezes 3 angesetzte axialsymmetrische Kurve 2. Ordnung ist in diesem Fall ein Kreis mit einem Radius von 36 mm. Die davon begrenzte Fläche des Biberschwanzes 2 ist also ein Kreissegment.

## Patentansprüche

1. Dämmplatte (1) aus Schaumkunststoff, gekennzeichnet durch biberschwanzförmige Verzahnungen (2) an den Stoßflächen, die sich im Verbund vollflächig ergänzen.

2. Dämmplatte nach Anspruch 1, dadurch gekennzeichnet, daß die biberschwanzförmige Verzahnung (2) geometrisch die Form eines Trapezes (3) mit einer an der längeren parallelen Seite (4) angesetzten Fläche aufweist, die von einer axial symmetrischen Kurve 2. Ordnung (8) begrenzt ist, deren Länge mindestens das 1,1-fache von der Länge der längeren parallelen Seite (4) beträgt.

3. Dämmplatte nach Anspruch 2, dadurch gekennzeichnet, daß die längere parallele Seite (4) des Trapezes eine Länge hat, die das 1,2- bis 2,5-fache der Plattendicke beträgt.

4. Dämmplatte nach einem der Ansprüche 2 bis 3, dadurch gekennzeichnet, daß die kürzere parallele Seite (5) des Trapezes (3) mindestens eine Länge hat, die dem 0,8-fachen der Plattendicke entspricht und höchstens eine Länge hat, die das 0,9 fache der Länge der längeren parallelen Seite (4) beträgt.

5. Dämmplatte nach einem der Ansprüche 2 bis 4, dadurch gekennzeichnet, daß die Höhe (7) des Trapezes mindestens der halben Plattendicke entspricht.

6. Dämmplatte nach einem der Ansprüche 1 bis 5, dadurch gekennzeichnet, daß jede Stoßfläche der Platte mindestens zwei vollständig eingebundene biberschwanzförmige Verzahnungen aufweist.

7. Dämmplatte nach einem der Ansprüche 2 bis 6, dadurch gekennzeichnet, daß die die längere parallele Seite (4) des Trapezes überspannende, axial symmetrische Kurve 2. Ordnung Teil eines Kreises, einer Elipse, einer Parabel oder eines Hyperbelzweiges ist.

8. Dämmplatte nach einem der Ansprüche 1 bis 7, dadurch gekennzeichnet, daß die biberschwanzförmigen Verzahnungen (9, 10) an den Ecken der Platte gleichfalls so ausgebildet sind, daß sie sich bei Verbundverlegung der Platten vollflächig ergänzen.

9. Dämmplatte nach einem der Ansprüche 1 bis 8, dadurch gekennzeichnet, daß die Grundrißfläche der Zähne 1/2 bis 1/20, vorzugsweise 1/2 bis 1/8 der übrigen Plattenoberfläche (12) ausmacht.

10. Dämmplatte nach einem der Ansprüche 1 bis 9, dadurch gekennzeichnet, daß die Stoßflächen der biberschwanzförmigen Verzahnungen im Winkel von 90° zur Plattenoberfläche angeordnet sind.

11. Dämmplatte nach einem der Ansprüche 1 bis 10, dadurch gekennzeichnet, daß sie wenigstens an der zum Verputzen vorgesehenen Oberfläche senkrecht dazu mit Scharen von längs und querverlaufenden Einschnitten (13) versehen ist, deren Tiefe größer ist als ihr halber Abstand (14).

12. Dämmplatte nach Anspruch 11, dadurch gekennzeichnet, daß die Breite der Einschnitte 10 bis 250 μm, vorzugsweise 10 bis 120 μm beträgt.

13. Dämmplatte nach einem der Ansprüche 1 bis 12, dadurch gekennzeichnet, daß sie formgeschäumt ist.

14. Dämmplatte nach einem der Ansprüche 1 bis 13, dadurch gekennzeichnet, daß der Schaumkunststoff Polystyrol-Hartschaumstoff ist.

15. Verwendung von Dämmplatten nach einem der Ansprüche 1 bis 14 für gedämmte Putzfassaden.

**Claims**

1. Insulation panel (1) made of plastic foam, characterised by sets of beaver-tail-shaped toothing (2) on the abutting surfaces which when joined together fully complete each other.

2. Insulation panel according to Claim 1, characterised in that the beaver-tail-shaped toothing (2) are geometrically in the shape of a trapezium (3) with a surface which is joined to the longer parallel side (4), which surface is delimited by an axially symmetrical curve of the second order (8), the length of which is at least 1.1 times the length of the longer parallel side (4).

3. Insulation panel according to Claim 2, characterised in that the longer parallel side (4) of the trapezium has a length which is 1.2 to 2.5 times the thickness of the panel.

4. Insulation panel according to one of Claims 2 to 3, characterised in that the shorter parallel side (5) of the trapezium (3) has at least a length which is 0.8 times the thickness of the panel, and has at most a length which is 0.9 times the length of the longer parallel side (4).

5. Insulation panel according to one of Claims 2 to 4, characterised in that the height (7) of the trapezium is at least half the thickness of the panel.

6. Insulation panel according to one of Claims 1 to 5, characterised in that each abutting surface of the panel has at least two sets of fully-integrated beavertail-shaped toothing.

7. Insulation panel according to one of Claims 2 to 6, characterised in that the axially symmetrical curve of the second order which spans the longer parallel side (4) of the trapezium is part of a circle, of an ellipse, of a parabola or of a branch of a hyperbola.

8. Insulation panel according to one of Claims 1 to 7, characterised in that the sets of beaver-tail-shaped toothing (9, 10) on the corners of the panel are also constructed so that they complete each other fully when the plates are laid in combination.

9. Insulation panel according to one of Claims 1 to 8, characterised in that the plan surface of the teeth makes up 1/2 to 1/20, preferably 1/2 to 1/8 of the remaining panel surface (12).

10. Insulation panel according to one of Claims 1 to 9, characterised in that the abutting surfaces of the sets of beaver-tail-shaped teeth are arranged at an angle of 90° to the panel surface.

11. Insulation panel according to one of Claims 1 to 10, characterised in that, at least on the surface which is provided for plastering perpendicular thereto, it is provided with systems of longitudinally and transversely extending recesses (13), the depth of which is greater than half the distance between them (14).

12. Insulation panel according to Claim 11, characterised in that the width of the recesses is 10 to 250 μm, preferably 10 to 120 μm.

13. Insulation panel according to one of Claims 1 to 12, characterised in that it is foamed in the mould.

14. Insulation panel according to one of Claims 1 to 13, characterised in that the foamed plastic is rigid expanded polystyrene.

15. Use of insulation panels according to one of Claims 1 to 14 for insulated plaster outside walls.

**Revendications**

1. Plaque isolante (1) en mousse synthétique, caractérisée par des dentures (2) en forme de queue de castor pratiquées sur les faces jointives, et qui se complètent pour former une surface continue lorsqu'elles sont assemblées.

2. Plaque isolante selon la revendication 1, caractérisée en ce que la denture (2) en forme de queue de castor a géométriquement la forme d'un trapèze (3) avec une surface attenante au grand côté (4) parallèle, qui est délimitée par une courbe de deuxième degré (8) de symétrie axiale, dont la longueur est au moins égale à 1,1 fois la longueur du grand côté parallèle (4).

3. Plaque isolante selon la revendication 2, caractérisée en ce que le grand côté parallèle (4) du trapèze a une longueur qui varie entre 1,2 et 2,5 fois l'épaisseur de la plaque.

4. Plaque isolante selon l'une des revendications 2 et 3, caractérisée, en ce que le petit côté parallèle (5) du trapèze (3) a au moins une longueur qui correspond à 0,8 fois l'épaisseur de la plaque et au plus une longueur qui est égale à 0,9 fois la longueur du grand côté parallèle (4).

5. Plaque isolante selon l'une des revendications 2 à 4, caractérisée en ce que la hauteur (7) du trapèze correspond au moins à la moitié de l'épaisseur de la plaque.

6. Plaque isolante selon l'une des revendications 1 à 5, caractérisée en ce que chaque face jointive de la plaque présente au moins deux dentures en forme de queue de castor s'imbriquant complètement l'une dans l'autre.

7. Plaque isolante selon l'une des revendications 2 à 6, caractérisée en ce que la courbe de deuxième degré, de symétrie axiale, surmontant le grand côté parallèle (4) du trapèze, est une partie d'un cercle, d'une ellipse, d'une parabole ou d'une branche d'hyperbole.

8. Plaque isolante selon l'une des revendications 1 à 7, caractérisée en ce que les dentures (9, 10) en forme de queue de castor sont également conformées aux angles de la plaque de telle sorte qu'elles se complètent pour former une surface continue lorsque les plaques sont assemblées.

9. Plaque isolante selon l'une des revendications 1 à 8, caractérisée en ce que la surface en projection horizontale des dents varie entre 1/2 et 1/20, de préférence 1/2 et 1/8 de la surface restante (12) de la plaque.

10. Plaque isolante selon l'une des revendications 1 à 9, caractérisée en ce que les faces jointives des dentures en forme de queue de castor sont disposées de manière à former un angle de 90° par rapport à la surface de la plaque.

11. Plaque isolante selon l'une des revendications 1 à 10, caractérisée en ce qu'il est prévu au moins sur la surface prévue pour le crépissage, perpendiculairement à celle-ci, des séries d'entailles (13) longitudinales et transversales dont la profondeur est supérieure à la moitié de leur espacement (14).

12. Plaque isolante selon la revendication 11, caractérisée en ce que la largeur des entailles varie entre 10 et 250 μm, de préférence entre 10 et 120 μm.

13. Plaque isolante selon l'une des revendications 1 à 12, caractérisée en ce qu'elle est expansée dans un moule.

14. Plaque isolante selon l'une des revendications 1 à 13, caractérisée en ce que la mousse synthétique est une mousse rigide de polystyrène.

15. Utilisation de plaques isolantes selon l'une des revendications 1 à 14 pour des façades isolées à crépi.

FIG.1

FIG. 2

EP 0 210 398 B1